# EUROPÄISCHE PATENTANMELDUNG

(11) **EP 3 506 026 A1**
(43) Veröffentlichungstag der Anmeldung: **03.07.2019**
(21) Anmeldenummer: 17211071.0
(22) Anmeldetag: 29.12.2017
(51) Int. Cl.: G05B 13/02, G05B 17/02

(54) **VERFAHREN ZUR RECHNERGESTÜTZTEN PRÄDIKTION VON MINDESTENS EINER GLOBALEN BETRIEBSGRÖSSE EINES TECHNISCHEN SYSTEMS**

(71) Anmelder: Siemens Aktiengesellschaft, 80333 München (DE)
(72) Erfinder: Grothmann, Ralph, 80796 München (DE); Obst, Birgit, 80935 München (DE); Rosen, Roland, 82229 Seefeld (DE); Sutor, Ariane, 82166 Gräfelfing (DE); Zimmermann, Hans-Georg, 82319 Starnberg/Percha (DE)

(57) **Zusammenfassung**

Verfahren zur rechnergestützten Prädiktion von mindestens einer globalen Betriebsgröße (Eglob) eines technischen Systems (300), das mindestens zwei Geräte (301, 302, 303) umfasst, wobei
- mindestens eine lokale Eingangsgröße (Wloc) für jedes einzelne Gerät abhängig von mindestens einer globalen Eingangsgröße (Wglob) mittels eines Daten-basierten Lernmodells (100) prognostiziert wird, und
- für jedes Gerät mindestens eine lokale Betriebsgröße (Eloc) mittels eines Funktions-basierten Simulationsmodells (200) abhängig von der prognostizierten lokalen Eingangsgröße (Wloc) ermittelt wird,
- die mindestens eine ermittelte lokale Betriebsgröße (Eloc) dem Daten-basierte Lernmodell (100) bereitgestellt wird (F) und
- eine Prognose der globalen Betriebsgröße (Eglob) des technischen Systems mittels des Daten-basierten Lernmodells (100) abhängig von der lokalen Betriebsgröße (Eloc) und den lokalen sowie den globalen Eingangsgrößen (Wloc, Wglob) ermittelt wird.

## Beschreibung

Die Erfindung betrifft ein Verfahren zur rechnergestützten Prädiktion von mindestens einer globalen Betriebsgröße eines technischen Systems das mindestens zwei Geräte umfasst sowie ein Computerprogrammprodukt zur Ausführung des Verfahrens auf einem Rechner.

In einer Vielzahl von Anwendungsgebieten ist es wünschenswert das Verhalten eines technischen Systems rechnergestützt zu modellieren, um bestimmte Betriebsparameter des technischen Systems vorherzusagen. Zum Beispiel werden in Bereich der elektrischen Energieerzeugung immer häufiger regenerative Energieerzeugungsanlagen eingesetzt, deren erzeugte Energiemengen stark von externen Größen und insbesondere von Wetterbedingungen beeinflusst werden. Somit ist es für ein technisches System in der Form einer regenerativen Energieerzeugungsanlage erwünscht, die zukünftig erzeugte Energiemenge geeignet vorherzusagen um hierdurch die Energieeinspeisung einer solchen Energieerzeugungsanlage besser planen zu können. Zur Planung und optimierten Steuerung einer Energie-Einspeiseleistung einer solchen Energieerzeugungsanlage sind Prognosemodelle einerseits hinsichtlich der sich verteilenden und zu erwartenden Windverhältnisse und andererseits hinsichtlich der zu optimierenden und erwarteten Einspeiseleistung der einzelnen Windenergievorrichtungen notwendig.

Es ist bekannt zur Modellierung des technischen Systems zum Beispiel ein künstliches neuronales Netz zu verwenden. Dabei werden ein oder mehrere Ausgabevektoren in Abhängigkeit von einem oder mehreren Eingabevektoren durch das Lernen des neuronalen Netzes basierend auf Trainingsdaten aus bekannten Eingabevektoren und Ausgabevektoren modelliert. Dabei umfasst ein jeweiliger Ausgabevektor eine oder mehrere Betriebsgrößen des technischen Systems. Ein jeweiliger Eingabevektor umfasst dabei eine oder mehrere Eingangsgrößen, die die Betriebsgrößen beeinflussen. Solche beispielsweise neuronalen Netze werden auch als Daten basierte Lernmodelle bezeichnet, da ihre Ausgabevektoren, d. h. die berechneten Betriebsgrößen, rein auf den Trainingsdaten und einem entsprechenden Lernmodell basieren.

Für eine dynamische Optimierung der lokalen Steuerung eines technischen Geräts ist eine Modellprädiktive Regelung, auch Model Predictive Control (MPC) genannt, bekannt. Hier werden physikalische Zusammenhänge analytisch oder numerisch abgebildet und mit Hilfe des vorhandenen Engineering Know-Hows über technischen Komponenten, deren Verhalten simuliert und deren Wirkungsgrad prädiziert. Ein solches auf physikalische Zusammenhänge basierendes Berechnungsmodell wird als Funktions-basiertes Simulationsmodell bezeichnet.

Die WO 2017/059862 A1 beschreibt beispielsweise die Steuerung eine Windturbine bei einem schnellen Anstieg der aktiven Energieerzeugung. Dazu wird aus dem vorliegenden Betriebszustand und dem eingestellten Grad der Erhöhung eine vorhergesagte Steuerungstrajektorie mithilfe eines prädiktiven Steuerungsmodels (PRC) berechnet und entsprechend dieser Trajektorie gesteuert.

Die Aufgabe der vorliegenden Erfindung ist es eine Vorhersage von globalen Betriebsgrößen eines technischen Systems, beispielsweise einer Energieerzeugungsanlage, zu verbessern. Eine weitere Aufgabe liegt darin, Steuerungsparameter in einzelnen Geräten einer solchen Anlage derart zu bestimmen, dass vorgegebene Kriterien, beispielsweise eine vorhergesagte globale Betriebsgröße erreicht wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Rechner gestützten Prädiktion von mindestens einer globalen Betriebsgröße eines technischen Systems das mindestens zwei Geräte umfasst, wobei mindestens eine lokale Eingangsgröße für jedes einzelne Gerät abhängig von mindestens einer globalen Eingangsgröße mittels eines Daten-basierten Lernmodells prognostiziert wird, und für jedes Gerät eine lokale Betriebsgröße mittels eines Funktions-basierten Simulationsmodells abhängig von der prognostizierten lokalen Eingangsgrößen ermittelt wird, die mindestens eine ermittelte lokale Betriebsgröße eines jeden Gerätes dem Daten-basierten Lernmodell bereitstellt und eine Prognose der globalen Betriebsgröße des technischen Systems mittels des Daten-basierten Lernmodells abhängig von der lokalen Betriebsgröße und den lokalen sowie den globalen Eingangsgrößen ermittelt wird.

Die zugrunde liegende Idee ist eine kooperative Integration von Daten-basierten Lernmodellen und physikalischen Verhaltensmodellen, also Funktions-basierten Simulationsmodellen. Dadurch werden Schwächen der Daten-basierten Lernmodelle mit Stärken der Funktions-basierten Simulationsmodelle zumindest teilweise kompensiert und umgekehrt. Beispielsweise können durch ein Daten-basiertes Lernmodell basierend auf einer Wetterprognose mit dynamischen Windverhältnissen, wie Windstärke, Windrichtung oder auch Windart als globale Eingangsgröße, entsprechende lokale Windverhältnisse als lokale Eingangsgrößen an den einzelnen Geräten, hier Windenergievorrichtungen, ermittelt werden. Basierend auf diesen lokalen Eingangsgrößen kann durch ein Funktions-basiertes Simulationsmodell beispielsweise für jedes einzelne Gerät des technischen Systems eine genaue lokale Betriebsgröße ermittelt werden. Diese lokalen Betriebsgrößen der einzelnen Geräte werden dem Daten-basierten Lernmodell bereitgestellt. Vom Daten-basierten Lernmodell wird daraus zusammen mit den globalen Eingangsgrößen eine verbesserte globale Betriebsgröße prädiziert. Insbesondere können abhängig von den dynamischen, globalen Windverhältnissen sog. Verschattungseffekte auf die lokalen Betriebsgrößen übertragen werden.

In einer vorteilhaften Ausführungsform wird die lokale Betriebsgröße eines Geräts vom Simulationsmodell zusätzlich abhängig von mindestens einem vorgegebenen ersten Steuerungsparameter des Geräts ermittelt.

Dieser mindestens eine vorgegebene erste Steuerungsparameter des Geräts kann beispielsweise eine Orientierung des Rotors, ein Anstellwinkel der Rotorblätter, Betriebsmodus wie ein/aus sein. Insbesondere können diese Angaben zu einem vorbestimmten Zeitpunkt tatsächlich am Gerät vorgelegen haben, insbesondere zum Zeitpunkt, auf den sich die globalen Eingangsgrößen beziehen. Dies ermöglicht eine präzise, den zu einer bestimmten Zeit vorliegenden Verhältnisse entsprechenden Vorhersage der lokalen Betriebsgrößen und somit auch eine verbesserte mit geringerer Fehlerwahrscheinlichkeit behaftete Prognose, der globalen Betriebsgröße.

In einer vorteilhaften Ausführungsform wird die mindestens eine lokale Betriebsgröße eines Gerätes iterativ abhängig von geänderten Steuerungsparametern des Geräts, die abhängig von der zuvor ermittelten lokalen Betriebsgröße bestimmt werden, durch das Funktions-basierte Simulationsmodell ermittelt.

Somit kann eine Prädiktion der mindestens einen globalen Betriebsgröße in Abhängigkeit von unterschiedlichen lokalen Betriebsgrößen ermittelt werden und insbesondere eine maximale globale Betriebsgröße und die dafür erforderlichen lokalen Betriebsgrößen ermittelt werden. Insbesondere können geänderte Steuerungsparameter des Gerätes basierend auf den in einem davor liegenden Iterationsschritt ermittelten lokalen und/oder globalen Eingangsgrößen ermittelt werden. Das heißt, dass eine Änderung der Steuerungsparameter des Gerätes abhängig von der zuvor berechneten lokalen Betriebsgröße vorgenommen beziehungsweise abhängig vom Ergebnis des Simulationsmodells gewählt wird.

In einer vorteilhaften Ausführungsform werden optimierte lokale Steuerungsparameter abhängig von der ermittelten globalen Betriebsgröße ermittelt und eine optimierte lokale Betriebsgröße vom Simulationsmodell basierend auf den optimierten Steuerungsparametern ermittelt.

Dadurch wird insbesondere eine Optimierung der globalen Betriebsgröße, die alle Geräte des technischen Systems einbezieht, erreicht. So können beispielsweise Steuerungsparameter in einzelnen Geräten angepasst und damit die lokale Betriebsgröße beeinflusst werden um eine Optimierung der globalen Betriebsgröße zu erreichen.

In einer vorteilhaften Ausführungsform wird eine globale Betriebsgröße eines technischen Systems in Form einer elektrischen Energieerzeugungsanlage und insbesondere einer regenerativen elektrischen Energieerzeugungsanlage prädiziert.

Somit wird insbesondere für regenerative elektrische Energieerzeugungsanlagen, die von einer Vielzahl von äußeren Einflussparametern wie beispielsweise Wind beziehungsweise Sonnenscheindauer und -intensität abhängen, eine optimierte Prognose für eine globale Betriebsgröße ermöglicht. Durch die Kopplung des Daten-basierten Lernmodells mit einem auf physikalischen Zusammenhänge basierenden Simulationsmodell, in dem zusätzlich Betriebsparameter der einzelnen Geräte des Systems berücksichtigt werden, können die Betriebsparameter der Energieerzeugungsanlage entsprechend dem Energiebedarf ermittelt werden.

In einer vorteilhaften Ausführungsform umfasst die Energieerzeugungsanlage eine Windkraftanlage und/oder eine Solarenergieanlage, insbesondere eine Solarthermieanlage und/oder eine Photovoltaikanlage.

Dabei ist unter einer Windkraftanlage ein Windpark zu verstehen, bestehend aus mehr als einem Gerät, das hier als eine Windturbine ausgebildet ist.

In einer vorteilhaften Ausführungsform umfasst die prognostizierte mindestens eine globale Betriebsgröße eine durch die Energieerzeugungsanlage generierte Energiemenge für eine Mehrzahl von aufeinanderfolgenden zukünftigen Zeitpunkten, wobei eine Energiemenge vorzugsweise die zwischen zwei aufeinanderfolgenden zukünftigen Zeitpunkten generierte Energiemenge aller Geräte umfasst.

Der Begriff der Energiemenge ist dabei weit zu verstehen und kann sich auf die in einem bestimmten Zeitraum erzeugte Energiemenge bzw. auf eine Energiemenge pro Zeiteinheit und damit eine elektrische Leistung beziehen.

In einer vorteilhaften Ausführungsform umfasst die globale Eingangsgröße eine oder mehrere am Gerät gemessene Eingangsgrößen, insbesondere Sensordaten und eine oder mehrere prognostizierte Eingangsgrößen für einen zukünftigen Zeitpunkt aus einer Mehrzahl von zukünftigen Zeitpunkten.

Somit können die mindestens eine globale Betriebsgröße sowohl auf tatsächlich vorliegende gemessene Sensordaten an jedem einzelnen Gerät sowie prognostizierte Eingangsgrößen kombiniert werden.

In einer vorteilhaften Ausführungsform beschreiben die prognostizierten Eingabegrößen bevorzugt Wetterdaten und insbesondere Windrichtung, Windstärke und Windart.

Beispiele für eine Art des Windes ist böiger Wind, gleichförmiger Wind oder zirkulierender Wind.

In einer vorteilhaften Ausführungsform wird als Daten-basierte Lernmodell eine maschinelle Lernmethode, insbesondere ein lineares oder ein nichtlineares Regressionsmodell verwendet.
Regressionsmodelle, die die Beziehung zwischen einer abhängigen Variable, hier der Betriebsgröße, und einer oder mehrerer unabhängiger Variablen, hier der Eingangsgrößen, modellieren, werden insbesondere verwendet, um Zusammenhänge quantitativ zu beschreiben oder Werte der abhängigen Variable zu prognostizieren. Zudem kann mit Regressionsverfahren die Stärke des Zusammenhangs von Eingangsgröße zu Ausgangsgröße bestimmt werden, beispielsweise in Form einer Sensitivitätsanalyse.

In einer vorteilhaften Ausführungsform wird als Funktions-basiertes Simulationsmodell ein auf physikalischen Zusammenhängen basiertes Rechenmodell, insbesondere als ein Modell prädiktiver Steuerung, verwendet.

Ein weiterer Aspekt der Erfindung betrifft ein Computerprogrammprodukt mit einem auf einem maschinenlesbaren Datenträger gespeicherten Programmcode zur Durchführung des beschriebenen Verfahrens, wenn der Programmcode auf einem Rechner ausgeführt wird.

Sofern es in der nachfolgenden Beschreibung nicht anders angegeben ist, beziehen sich die Begriffe "Prognostizieren", "Ermitteln", "Bereitstellen", "Modellieren" und dergleichen vorzugsweise auf Handlungen und/oder Prozesse und/oder Verarbeitungsschritte, die Daten verändern und/oder Erzeugen und/oder die Daten in andere Daten überführen, wobei die Daten insbesondere als physikalische Größen dargestellt werden oder vorliegen können, beispielsweise als Sensordaten oder auch als elektrische Impulse. Insbesondere sind die Begriffe "Rechner" oder "Computer" derart auszulegen, dass insbesondere alle elektronischen Geräte mit Datenverarbeitungseigenschaften umfasst sind. Rechner bzw. Computer können somit beispielsweise Personal Computer, Server, Steuergeräte, Handheld-Computersysteme, Pocket-PC-Geräte, Mobilfunkgeräte und andere Kommunikationsgeräte, die rechnergestützte Daten verarbeiten können, Prozessoren und andere elektronische Geräte zur Datenverarbeitung sein.

Ein Computerprogrammprodukt, wie zum Beispiel ein Computerprogrammmittel, kann beispielsweise ein Speichermedium wie beispielsweise eine Speicherkarte, ein USB-Stick, eine CD-Rom, DVD sein oder auch in Form einer herunterladbaren Datei von einem Server in einem Netzwerk bereitgestellt oder geliefert werden.

Ausführungsbeispiele des erfindungsgemäßen Verfahrens sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens in Form eines Datenflusses in schematischer Darstellung; und
- Figur 2: ein Ausführungsbeispiel eines technischen Systems mit einer Mehrzahl von Geräten in schematischen Darstellung.

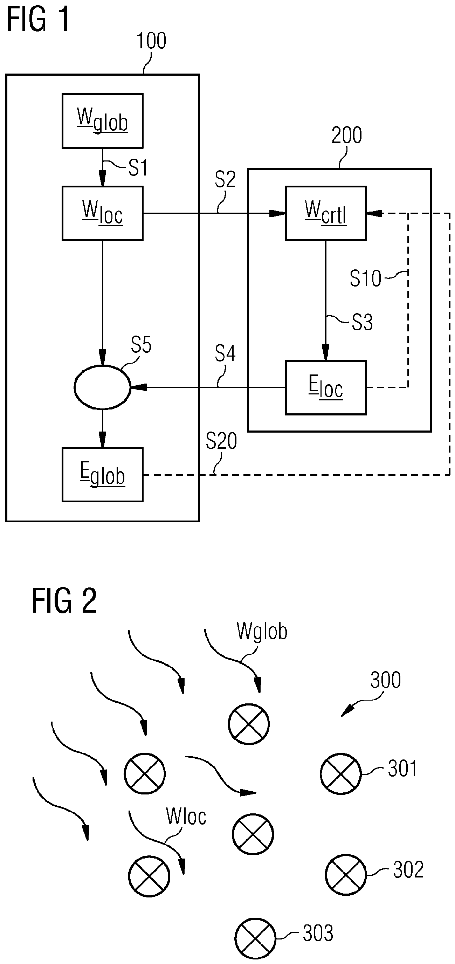

Figur 1 zeigt einen schematischen Ablauf zur Kopplung eines Daten-basierten Lernmodells 100 mit einem Funktions-basierten Simulationsmodell 200. Unter einem Daten-basierten Lernmodell 100 ist dabei beispielsweise ein lineares oder auch nichtlineares Regressionsmodell wie beispielsweise ein Neuronales Netz zu verstehen. Das Neuronale Netz kann beispielsweise ein Feed-Forward-Netz sein.

Ein Funktions-basierten Simulationsmodell 200 ist insbesondere ein deskriptives Simulationsmodell, beispielsweise ein modellprädiktive Regelung oder ein physikalisches Jensen Modell. Wird von einem Simulationsmodell gesprochen, so ist immer ein Funktions-basiertes Simulationsmodell 200 gemeint, da ein Simulationsmodell prinzipiell auf einer funktionalen Modellierung der physikalischen Wirkzusammenhänge einer technischen Einrichtung, wie beispielsweise einer Windenergievorrichtung, auch als Windturbine bezeichnet, basiert.

Ein technisches System 300, siehe Figur 2, wird nachfolgend am Beispiel einer Energieerzeugungsanlage, insbesondere einer Windkraftanlage, beschrieben. Die Bezeichnung Windkraftanlage wird hier insbesondere als Synonym für einen Windpark verwendet.

Globale Größen bezeichnen dabei jeweils Größen, die sich auf das gesamte technische System 300, in diesem Fall also die Gesamtheit der Windenergievorrichtungen in einer Windkraftanlage, beziehen. Lokale Größen, also die lokale Eingangsgröße Wloc sowie die lokale Betriebsgröße Eloc, beziehen sich jeweils auf ein einzelnes Gerät 301, 302, 303, im Beispiel eine einzelne Windenergievorrichtung. In einer Solarenergieanlage als technisches System 300 wäre eine lokale Betriebsgröße Eloc oder lokale Eingangsgröße Wloc auf ein einzelnes Solarenergiemodul bezogen. Ein lokaler Steuerungsparameter Wctrl bezieht sich in gleicher Weise auf das einzelne Gerät 301, 302, 303 und ist bei einer Windenergievorrichtung beispielsweise der Betriebszustand Ein/Aus, die Orientierung des Rotors einer Windenergievorrichtung oder auch ein Anstellwinkel der Rotorblätter.

In einem ersten Verfahrensschritt S1 wird mindestens eine globale Eingangsgröße Wglob, beispielsweise durch eine Messung der Windverhältnisse mit Sensoren an vorgegebenen Punkten im technischen System 300, hier also der Windkraftanlage, ermittelt. So können beispielsweise über Sensoren Windgeschwindigkeit, Windrichtung aber auch die Temperatur und Luftdruck in unterschiedlicher Höhe und Position ermittelt werden. Des Weiteren kann als globale Eingangsgröße Wglob zusätzlich eine Prognose der Windverhältnisse für zukünftige Zeitpunkte als Eingangsparameter in das Daten-basierte Lernmodell 100 eingehen. Aus diesen globalen Eingangsgrößen Wglob werden dabei durch das Daten-basierte Lernmodell 100 die derzeit vorliegenden Windverhältnisse sowie Windverhältnisse von zukünftigen Zeitpunkten an jeder einzelnen Windturbine in Abhängigkeit von historischen Daten, unter Berücksichtigung der räumlichen Verteilung der Windenergievorrichtungen, der topologischen Gegebenheiten und unter Berücksichtigung einer Verschattung am Gerät durch die anderen Geräte, ermittelt. Diese Zusammenhänge werden über ein Daten-basiertes Lernmodell 100, beispielsweise einem Neuronalen Netz, gelernt und daraus eine lokale Eingangsgröße Wloc für jedes einzelne Gerät 301, 302, 303 ermittelt.

Die lokalen Eingangsgrößen Wloc werden anschließend im Verfahrensschritt S2 an das Funktions-basierte Simulationsmodell 200 bereitgestellt. Unter Berücksichtigung von lokalen Steuerungsparametern WCtrl und den ermittelten lokalen Eingangsgrößen Wloc als Eingangsparameter wird durch das Funktions-basierte Simulationsmodell 200 eine lokale Betriebsgröße Eloc, beispielsweise eine Energieleistung, für jedes einzelne Gerät 301, 302, 303, also jede spezifische Windenergievorrichtung, im Verfahrensschritt S3 ermittelt. Diese lokale Betriebsgröße Eloc wird mit Hilfe eines physikalischen Modells berechnet. In Abhängigkeit von den prognostizierten Windverhältnissen Wloc kann damit über eine aktuelle Messung hinaus die lokale Betriebsgröße Eloc auch für in der Zukunft liegende Zeitpunkte prädiziert werden.

Optional können basierend auf der ermittelten lokalen Betriebsgröße Eloc Steuerungsparametern Wctrl eines jeden Gerätes 301, 302, 303, optimiert werden. Eine Optimierung kann bezüglich unterschiedlicher Kriterien, wie beispielsweise eine Maximierung der lokalen Betriebsgröße Eloc, beispielsweise der erzeugten Energiemenge oder der Energieleistung, einer Minimierung des Verschleißes eines Geräts 301, 302, 303, oder Komponenten des Geräts, ermittelt werden und im Verfahrensschritt S10 als optimierte lokale Steuerungsparametern WCtrl als Eingangsparameter in das Funktions-basierte Simulationsmodell 200 bereitgestellt werden. Eine solche Optimierung kann iterativ in mehreren Durchläufen mit geänderten Steuerungsparametern Wcrtl durchgeführt werden. Ist die Optimierung der einzelnen Geräte 301, 302, 303, abgeschlossen, beispielsweise eine maximale Anzahl an Iterationsschritten durchgeführt oder eine Abweichung aufeinanderfolgender resultierender lokaler Betriebsgrößen Wloc kleiner als ein vorgegebener Schwellwert, werden die resultierenden lokalen Betriebsgrößen Eloc im Verfahrensschritt S4 an das Daten-basierte Lernmodell 100 bereitgestellt und im Verfahrensschritt S5 mit den Daten des Daten-basierten Lernmodells 100 fusioniert.

Im Daten-basierten Lernmodell 100 wird der Zusammenhang zwischen beispielsweise eingehenden Windverhältnissen, die über globale Eingangsgrößen Wglob eingehen, und der resultierenden globalen Betriebsgröße Eglob des technischen Systems, hier also der gesamten Windkraftanlage, abgebildet. Durch die Berücksichtigung des physikalischen Zusammenhangs zwischen den lokalen Windverhältnissen Wloc sowie vorgegebenen oder optimierten Steuerungsparameter Wcrtl der einzelnen Geräte 301, 302, 303 und der damit verbundenen lokalen Betriebsgrößen Eloc im Simulationsmodell 200 wird eine verbesserte Vorhersage der globale Betriebsgrößen Eglob auch für einen zukünftigen Zeitpunkt beziehungsweise eine Mehrzahl von zukünftigen Zeitpunkten, erreicht.

In einem weiteren optionalen Optimierungsschritt S20 können basierend auf der resultierenden globalen Betriebsgröße Eglob lokale Steuerungsparametern Wctrl der einzelnen Geräte 301, 302, 303, angepasst und in dem Funktions-basierte Simulationsmodell 200 bereitgestellt werden. Daraus wird wiederum im Verfahrensschritt S3 eine lokale Betriebsgrößen Eloc ermittelt und wiederum dem Daten-basierten Lernmodell in einem erneuten Verfahrensschritt S4 bereitgestellt und dort im Verfahrensschritt S5 erneut mit den globalen beziehungsweise lokalen Eingangsgrößen Wglob, Wloc eine globale Betriebsgröße Eglob ermittelt. So können beispielsweise die Steuerungsparameter Wctrl der einzelnen Windenergievorrichtungen 301, 302, 303, nicht nur nach dem Eingangswind, hier durch Eloc gegeben, bestimmt werden, sondern entsprechend einer gewünschten Energieerzeugungspotential der Windkraftanlage, die hier durch die Betriebsgröße Eglob gegeben ist, optimiert werden.

Der Verfahrensschritt S20, der ein solches Optimierungsverfahren über das gesamte technische System 300 darstellt, kann beispielsweise mittels eines heuristischen oder Reinforcement-Verfahrens erfolgen.

Durch die Kombination eines Daten-basierten Lernmodells mit einem Funktions-basierten Simulationsmodell 200 kann eine deutliche Reduzierung von Prognosefehlern erreicht werden. Insbesondere wird dadurch die Prognose auch für weiter in der Zukunft liegende Zeitpunkte genauer beziehungsweise der Prognosefehler geringer und somit die Prognose zuverlässiger. Durch die Berücksichtigung der Steuerungsparameter der einzelnen Geräte kann zudem eine Maximierung, beispielsweise der globalen Betriebsgröße, unter Berücksichtigung zusätzlicher Kriterien erreicht werden. So kann beispielsweise eine Optimierung der globalen Betriebsgröße selbst, beispielsweise der generierten Energiemenge, als Kriterium für die Optimierung der Steuerungsparameter verwendet werden. Die Steuerungsparameter können aber auch hinsichtlich einer Minimierung des Verschleißes oder einem vorgegebenen Verlauf der globalen Betriebsgröße abhängig vom zeitlichen Verlauf des Energiebedarfs verwendet werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur rechnergestützten Prädiktion von mindestens einer globalen Betriebsgröße (Eglob) eines technischen Systems (300) das mindestens zwei Geräte (301, 302, 303) umfasst, wobei
- mindestens eine lokale Eingangsgröße (Wloc) für jedes einzelne Gerät abhängig von mindestens einer globalen Eingangsgröße (Wglob) mittels eines Daten-basierten Lernmodells (100) prognostiziert wird, und
- für jedes Gerät mindestens eine lokale Betriebsgröße (Eloc) mittels eines Funktions-basierten Simulationsmodells (200) abhängig von der prognostizierten lokalen Eingangsgröße (Wloc) ermittelt wird,
- die mindestens eine ermittelte lokale Betriebsgröße (Eloc) dem Daten-basierte Lernmodell (100) bereitgestellt wird (F) und
- eine Prognose der globalen Betriebsgröße (Eglob) des technischen Systems mittels des Daten-basierten Lernmodells (100) abhängig von der lokalen Betriebsgröße (Eloc) und den lokalen sowie den globalen Eingangsgrößen (Wloc, Wglob) ermittelt wird.

2. Verfahren nach Anspruch 1, wobei die mindestens eine lokale Betriebsgröße (Eloc) eines Geräts (301, 302, 303) vom Simulationsmodell (200) zusätzlich abhängig von mindestens einer vorgegebenen Steuerungsparameter (Wctr) des Geräts (301, 302, 303) ermittelt wird.

3. Verfahren nach Anspruch 2, wobei die mindestens eine lokale Betriebsgröße (Eloc) eines Geräts (301, 302, 303) iterativ abhängig von geänderten Steuerungsparametern (Wcrt) des Geräts (301, 302, 303), die abhängig von der zuvor ermittelten lokalen Betriebsgröße (Eloc) bestimmt werden, durch das funktionsbasierte Simulationsmodell (200) ermittelt wird.

4. Verfahren nach einem der Ansprüche 2 bis 3, wobei optimierte lokale Steuerungsparameter (Wctrl) abhängig von der ermittelten globalen Betriebsgröße (Eglob) ermittelt werden und eine optimierte lokale Betriebsgröße (Eloc) vom Simulationsmodell (200) basierend auf den optimierten lokalen Steuerungsparametern (Wcrtl) ermittelt wird.

5. Verfahren nach einem der vorhergehenden Ansprüche, bei dem eine globale Betriebsgröße (Eglob) eines technischen Systems (300) in der Form einer elektrischen Energieerzeugungsanlage und insbesondere einer regenerativen elektrischen Energieerzeugungsanlage prädiziert wird.

6. Verfahren nach Anspruch 5, bei dem die Energieerzeugungsanlage eine Windkraftanlage und/oder eine Solarenergieanlage umfasst, insbesondere eine Solarthermieanlage und/oder eine Photovoltaikanlage.

7. Verfahren nach Anspruch 5 oder 6, wobei die prognostizierte mindestens eine globale Betriebsgröße (Eglob) durch die Energieerzeugungsanlage generierte Energiemengen für eine Mehrzahl von aufeinander folgenden zukünftigen Zeitpunkten umfasst, wobei eine Energiemenge vorzugweise die zwischen zwei aufeinander folgenden zukünftigen Zeitpunkten generierte Energiemenge ist.

8. Verfahren nach einem der vorhergehenden Ansprüche , wobei die globale Eingangsgröße (Wglob) eine oder mehrere am Gerät gemessene Eingangsgrößen, insbesondere Sensordaten umfasst und eine oder mehrere prognostizierte Eingangsgrößen für einen zukünftigen Zeitpunkt aus einer Mehrzahl von zukünftigen Zeitpunkten umfasst.

9. Verfahren nach Anspruch 8, wobei die prognostizierten Eingangsgrößen, bevorzugt Wetterdaten und insbesondere Windrichtung, Windstärke, Windart sind.

10. Verfahren nach einem der vorhergehenden Ansprüche, wobei als Daten-basiertes Lernmodell (100) eine Maschinelle Lernmethode, insbesondere ein lineares oder ein nicht- lineares Regressionsmodell, verwendet wird.

11. Verfahren nach einem der vorhergehenden Ansprüche, wobei als Funktions-basierte Simulationsmodell (200) ein auf physikalischen Zusammenhängen basiertes Rechenmodell, insbesondere ein Modell prädiktiver Steuerung, verwendet wird.

12. Computerprogrammprodukt mit einem auf einem maschinenlesbaren Datenträger gespeicherten Programmcode zur Durchführung eines Verfahrens nach einem der vorhergehenden Ansprüche, wenn der Programmcode auf einem Rechner ausgeführt wird.
